(19) **Europäisches Patentamt**

**European Patent Office**

**Office européen des brevets**

(11) **EP 0 692 650 B2**

(12) ## NEW EUROPEAN PATENT SPECIFICATION

| | |
|---|---|
| (45) Date of publication and mention of the opposition decision: **05.02.2003 Bulletin 2003/06** | (51) Int Cl.$^7$: **F16D 41/06** |

(45) Mention of the grant of the patent: **12.01.2000 Bulletin 2000/02**

(21) Application number: **95302379.3**

(22) Date of filing: **11.04.1995**

(54) **One-way clutch**

Einweg-Kupplung

Accouplement uni-directionnel

(84) Designated Contracting States: **DE FR GB IT**

(30) Priority: **12.07.1994 JP 15991894**
    **10.03.1995 US 401945**

(43) Date of publication of application: **17.01.1996 Bulletin 1996/03**

(73) Proprietor: **Shimano Inc. Osaka 590-0824 (JP)**

(72) Inventor: **Hasegawa, Kiyoshi Sakai-shi, Osaka (JP)**

(74) Representative: **Pacitti, Paolo et al Murgitroyd and Company 165-169 Scotland Street Glasgow G5 8PL (GB)**

(56) References cited:
**FR-A- 541 498**        **FR-A- 1 061 396**
**FR-A- 1 353 870**      **GB-A- 272 619**
**GB-A- 422 067**        **GB-A- 191 306 195**
**US-A- 1 947 703**      **US-A- 2 029 244**
**US-A- 2 902 125**      **US-A- 5 099 972**

• **"Planetengetriebe, Schaltsysteme und Freiläufe in Fahrrad- und Motorradnaben" Ing. H.J.Schwerdhöfer, Sonderdruck aus Antriebstechnik, Krausskopf-Verlag, Mainz, Oktober 1965**

## Description

BACKGROUND OF THE INVENTION

The present invention is directed to mechanical devices and, more specifically, to a one-way clutch.

A prior art one-way clutch is constructed as shown in Fig. 6. As shown in Fig. 6, each of a plurality of clutch member spaces 5 between an external rotary member 1 and an internal rotary member 2 is equipped with only one roller 4 as a clutch rolling member. A retainer 7 and a spring 8 are disposed between each pair of rollers 4 so that each spring 8 may push its corresponding roller 4 into the narrower side of the clutch member space 5 while using the retainer 7 as a reaction member. As a result, when the external rotary member 1 rotates in a direction F, the roller 4 is enabled to quickly bite into a cam surface K1 of the external rotary member 1 and a cam surface K2 of the internal rotary member 2 by the pushing action of the spring 8. Thus, when the rotating force is input to the external rotary member 1, the rotating force is output from the internal rotary member 2 with very little delay.

Since, in the prior art, only one clutch rolling member is disposed in each clutch member space, a relatively large transmission load is applied to each rolling member at the transmission time so that the rolling member becomes liable to wear. As a result of the wear, the rolling members are deformed to make the meshing engagements between the rolling members and the two rotary members unstable, and slippage in the transmission may occur between the external rotary member and the internal rotary member. Furthermore, upon repeated acceleration and deceleration of the input side rotary member, the rolling members are repeatedly carried toward the wider sides of the clutch member spaces in accordance with the overrun of the output side rotary member. As the rollers repeatedly impinging upon the springs the risk of deforming or breaking the springs and the retainers increases.

Prior art one-way clutches are disclosed in US 2,029,244, US 5,099,972 and FR 1,061,396, which show clutches having internal and external rotary members with a number of clutch member spaces therebetween, each clutch member space including one or more rolling members which can move between a first position in which at least one of the rolling members prevents relative rotation of the rotary members, and a second position in which both rotary members are not engaged by the roller so relative rotation of the rotary members is allowed.

The apparatus of US 2,029,244 has a plurality of rolling members enclosed in a cage within each clutch member space and uses a spring loaded pin associated with each clutch member space in order to bias the rolling members towards the first position.

The apparatus of US 5,099,972 also uses a pin biased by a spring in each clutch member space.

The apparatus of FR 1,061,396 includes an embodiment in which two rolling members are provided within each clutch member space and one of the rolling members effectively pushes the other into the first position. However, in order to force the rolling members into the first position, pressurised oil is used, which makes the construction of the apparatus complex. This document is used as the basis for the preamble of Claim 1.

SUMMARY OF THE INVENTION

According to the present invention there is provided a one-way clutch in accordance with Claim 1.

Additional features which may be included in preferred embodiments of a one-way clutch in accordance with the present invention are disclosed in the dependent claims.

In one embodiment of the present invention, there are formed between an external rotary member and an internal rotary member a plurality of clutch member spaces which are defined by cam surfaces of the external rotary member and a cam surface of the internal rotary member. The clutch member spaces are arranged in the circumferential direction of the two rotary members. Each of the plurality of clutch member spaces includes a plurality of rolling members disposed in the circumferential direction of the two rotary members, and the gap between the cam surfaces of the external rotary member and the cam surface of the internal rotary member which define each clutch member space changes in the circumferential direction of the two rotary members. More specifically, each clutch member space is wider in the direction of rotation of the external rotary member and internal rotary member. A stopper is formed integrally with the external rotary member in the wider portion of each clutch member space for limiting the travel of the rolling members disposed within that clutch member space.

At least one of the plurality of rolling members individually positioned in the plurality of clutch member spaces is a clutch rolling member to be switched between a transmission ON state, in which it bites into the two cam surfaces to rotate the two rotary members together, and a transmission OFF state, in which the bite is released to allow the two rotary members to rotate relative to each other. When the rolling members are carried toward the wider side of the clutch member spaces, the stoppers act to receive the rolling members directly to set the limit of movement of the rolling members.

The rolling members positioned at the narrow sides of the clutch member spaces are constructed to act as the clutch rolling members to bite into the cam surfaces, and the rolling members positioned at the wider sides of the clutch member spaces are constructed to act as control rolling members for the clutch rolling members. When the input side of the external rotary member and the internal rotary member starts its rotation in response to the driving input, the control rolling members are rotated on their axes by their contacts with the input side rotary member to carry the clutch rolling members to the narrow sides of the clutch member spaces. Thus, as the input side rotary member rotates, the clutch rolling members quickly move to the narrow sides of the clutch member spaces to bite into the cam surfaces, thereby to join the external rotary member and the internal rotary member in the integrally rotatable manner.

The plurality of rolling members in each clutch member space may have equal diameters, or else the plurality of rolling members may have different diameters wherein the rolling member having the larger diameter is positioned at the forward side in the driving direction of the two rotary members. The plurality of rolling members may be constructed having diameters so that there are spaces between the rolling members during operation, or else the plurality of rolling members may be constructed having diameters so that the plurality of rolling members contact each other as they move toward the narrower side of the clutch member space. The latter construction allows the external rotary member to be formed with flat cam surfaces, but if the external rotary member is formed with continuously smooth cam surfaces, then the plurality or rollers may be constructed having diameters so that the plurality of rollers in each clutch member space together bite into the cam surfaces.

If the plurality of rolling members are constructed such that all of the plurality of rolling members bite into the cam surfaces from the start of service to join the external rotary member and the internal rotary member, that is, such that all the rolling members act as the clutch rolling members, then the transmission load, which has been borne by one rolling member in the prior art, is dispersed in each of the clutch member spaces among the plurality of rolling members so that the rolling members wear less than those of the prior art.

If desired, the one-way clutch may be constructed such that all of the rolling members do not bite into the cam surfaces to join the external rotary member the internal rotary member from the start of service. In that case, any one or more of the plurality of rolling members initially acts as the clutch rolling member to bite into the cam surfaces, whereas the remaining rolling members are kept away from biting into the cam surfaces by giving them a size different from that of the clutch rolling members or by obstructing them from moving to the narrower sides of the clutch member spaces and hence preventing them from biting into the cam surfaces. If some of the rolling members are initially prevented from biting into the cam surfaces by giving them a size different from the that of the clutch rolling members, then, when the rolling members acting as the clutch rolling members from the start of service begin to wear, their function may either be replaced or supplemented by the initially inoperative rolling members. For example, when the rolling members which acted as the clutch rolling members from the start of service wear, they will be carried further into the narrower side of the clutch member spaces. Then, the rolling members which were positioned before the wear at the wider sides of the clutch member spaces and which did not act as clutch rolling members move to the narrower sides of the clutch member spaces so that they too bite into the cam surfaces to now act as clutch rolling members. In other words, if a rolling member which acted as a clutch rolling member from the start of service should wear at a relatively early stage due to a relatively heavy transmission load as in the prior art, another new rolling member acts together with the worn rolling member to reliably perform the transmission function. Alternatively, the rolling member which acted as the clutch rolling member from the start of service may have its function replaced by the new clutch rolling member, so that the new clutch rolling member joins the external rotary member and the internal rotary member in the integrally rotatable manner. As a result, the service life of the one-way clutch is greater than that of prior art clutches, even if the individual rolling members have wearing rates identical to those of the prior art.

Whether all of the plurality of rolling members act as the clutch rolling members from the start of service, or whether a rolling members acts as a clutch rolling member only after a lapse of service time, the rolling members can have their moving limits set at the overrunning time while allowing the clutch rolling members to relatively quickly bite into the two rotary members by replacing the springs of the prior art with stoppers which are integrally formed on the external rotary member. More specifically, the stoppers formed integrally with the external rotary member are nonelastic stoppers, so that they have no control force for pushing the rolling members, unlike the springs of the prior art. However, the nonelastic stoppers, in turn, allow the plurality of rolling members to be disposed in each clutch member space so that their individual range of motion is intrinsically small. As a result, even if the moving limit of the rolling members is set at the overrunning time by the nonelastic stoppers, the rolling members quickly bite into the two rotary members at the input time because of their intrinsically small range of motion. Additionally, the rolling members quickly bite into the two rotary members at the force input time because one or more rolling members act as the control rolling members to aid the movement of the remaining rolling members to the narrower sides of the clutch member spaces. This effect may occur even if the clutch rolling member has worn.

The use of the stoppers of the present invention allow for the elimination of the springs and retainers used in prior art clutches, thus providing a long service life without the deformation and breakage which has been frequently caused in the springs or retainers of the prior art. Even if auxiliary springs were to be added to the present invention for pushing the rolling members to move the clutch rolling members toward the biting sides, they may have spring forces far weaker than those of the springs of the prior art, and the stoppers formed integrally on the external rotary member may exert their forces directly upon the rolling members, so that the springs are hardly deformed or broken even though they abut against the rolling members.

BRIEF DESCRIPTION OF THE DRAWINGS

Fig. 1 is a cross-sectional view of a particular embodiment of a one-way clutch according to the present invention;
Fig. 2 is a cross-sectional diagram of a particular embodiment of a clutch member space according to the present invention showing a transmission OFF state;
Fig. 3 is a cross-sectional diagram of a particular embodiment of a clutch member space according to the present invention showing a transmission ON state;
Fig. 4 is a cross-sectional view of an alternative embodiment of a clutch member space according to the present invention;
Fig. 5 is a cross sectional view of an alternative embodiment of a one-way clutch according to the present invention; and
Fig. 6 is a cross-sectional view of a one-way clutch known in the prior art.

DETAILED DESCRIPTION OF THE EMBODIMENTS

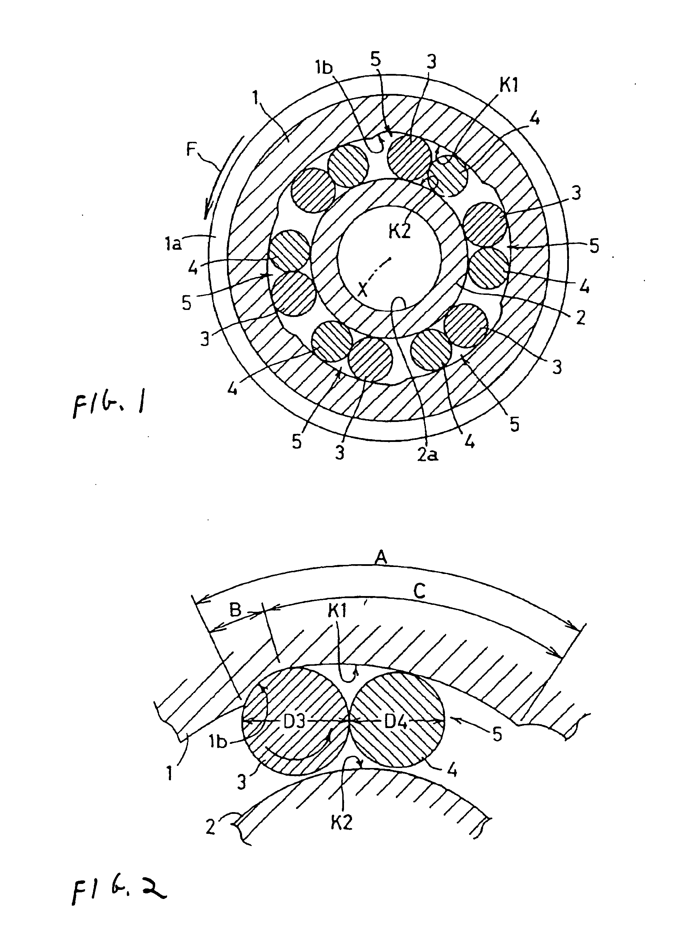

Fig. 1 is a cross-sectional view of a particular embodiment of a one-way clutch according to the present invention. As shown in Fig. 1, a roller type one-way clutch is constructed by arranging a plurality of rollers 3 and 4 between an external rotary member 1, having a belt pulley portion 1a, and an internal rotary member 2. Internal rotary member 2 is positioned inside of the external rotary member 1 so as to rotate coaxially with and relative to the external rotary member 1. The plurality of rollers 3 and 4 have axes of rotations exactly or generally in parallel with the axis X of rotation of the two rotary members 1 and 2 and are juxtaposed to each other in the circumferential direction of the two rotary members 1 and 2. The external rotary member 1 is associated with a belt so that it may be driven by the (not-shown) motor in the direction of rotation F, and the internal rotary member 2 is joined at its opening 2a to the (not shown) apparatus to be driven. Specifically, the one-way clutch is constructed such that the rotating force in the direction F can be input from the motor to the external rotary member 1 and output as the driving power from the internal rotary member 2 to the apparatus, while enabling the apparatus to overrun by the inertia of rotation when the motor is stopped or decelerated, as will be described in detail below.

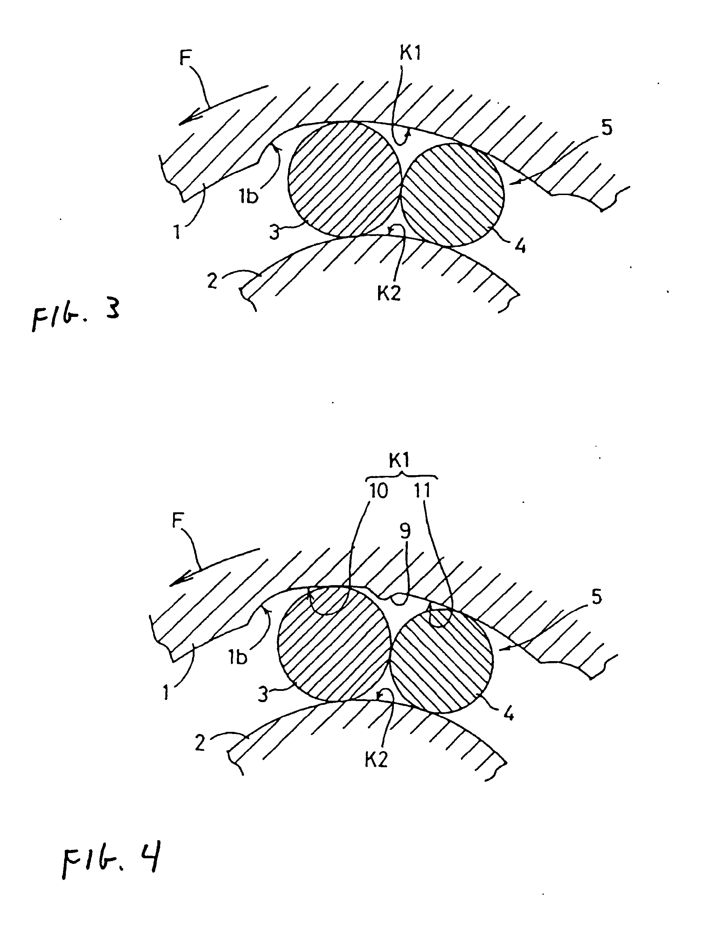

Between the external rotary member 1 and the internal rotary member 2 are formed six clutch member spaces 5 which are arranged in the circumferential direction of the two rotary members 1 and 2. Each clutch member spaces has two of the aforementioned rollers 3 and 4. As shown in Fig. 2 each clutch member space 5 is defined by both one of six cam surfaces K1 formed on the inner circumference of the external rotary member 1 and a cam surface K2 of the internal rotary member 2 facing the cam surface K1. Each of the six cam surfaces K1 of the external rotary member 1 is formed into an arcuate surface so that the cam surface K1 becomes progressively closer to the cam surface K2 in the direction opposite to direction F. Moreover, each cam surface K1 has such a length in the circumferential direction of the external rotary member 1 as extends over an angular range C narrower by an angular range B than an angular range A corresponding to one sixth of the inner circumference of the external rotary member 1. The angular range B spans an arcuate stopper 1b integrally formed with the external rotary member 1. The cam surface K2 of the internal rotary member 2 corresponding to the cam surface K1 of the external rotary member 1 forms part of the outer circumference of a cylinder on the axis X of the external rotary member 1. Thus, each clutch member space 5 is formed into a forward diverging chamber in which the gap between the cam surface K1 of the external rotary member 1 and the cam surface K2 of the internal rotary member 2 grows wider in the direction of rotation of the two rotary members 1 and 2.

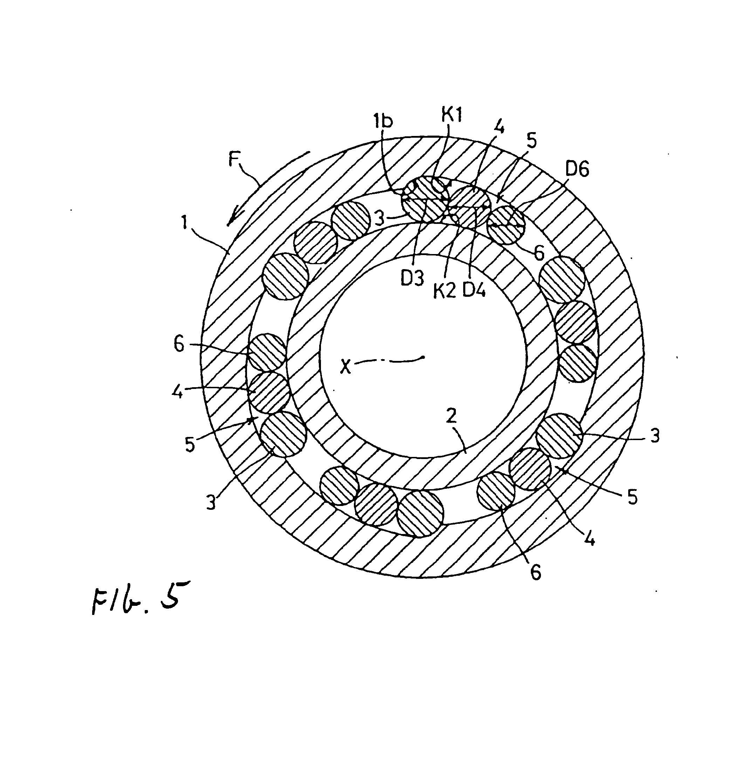

In each of the six clutch member spaces 5, as shown in Figs. 1 and 2, the rollers 3 and 4 are made such that the roller 3 is arranged at the forward side of the roller 4 in the direction F of the external rotary member 1 and the internal rotary member 2. In this embodiment, the roller 3 has a diameter D3 larger than the diameter D4 of the roller 4. A transmission is turned ON when the roller 4 is carried toward the narrower side of the clutch member space 5 to take the position shown in Fig. 3. More specifically, the rollers 4 act as clutch rollers and bite, when the transmission is ON, into the cam surfaces K1 of the external rotary member 1 and the cam surface K2 of the internal rotary member 2 to rotate the external rotary member 1 and the internal rotary member 2 together. The transmission is turned OFF when the rollers 4 are carried from the aforementioned ON state toward the wider sides of the clutch member spaces 5 to or near the position shown in Fig. 2, wherein they abut against the rollers 3 received and borne by the aforementioned stoppers 1b of the external rotary member 1. In this OFF state, the bites into the cam surfaces K1 of the external rotary member 1 and the cam surface K2 of the internal rotary member 2 are released to allow the external rotary member 1 and the internal rotary member 2 to rotate relative to each other. In the transmission OFF state, the rollers 3 can have their diameter D3 and their gaps from the cam surfaces K1 and K2 set such that they can be prevented from biting into the cam surfaces K1 and K2 to allow the relative rotations of the external rotary member 1 and the internal rotary member 2.

In this embodiment, the cam surfaces K1 of the external rotary member 1 are formed into a smooth and continuous curved surface. As a result, although the cam surface K2 of the internal rotary member 2 is a curved surface formed by the outer circumference of a cylinder, the transmission can be shifted from the aforementioned OFF state to the aforementioned ON state and vice versa with the rollers 3 and 4 being held in contact. That is, the rollers 3 can turn from the positions in which they abut against the aforementioned stoppers 1b of the external rotary member 1, to the positions in which they abut against the rollers 4 in the aforementioned ON state, while in contact with the rollers 4.

As the motor is accelerated from the state shown in Fig. 2 to rotate the external rotary member 1 in the direction F, the rollers 3 are caused to rotate on their axes in the direction of the arrow in Fig. 2 by their contacts with the external rotary member 1 so that their rotational forces carry the rollers 4 toward the narrower sides of the clutch member spaces 5. Rollers 4 then bite into the cam surfaces K1 and K2 and are in the transmission ON state. As a result, the internal rotary member 2 outputs the rotating force from the external rotary member 1 to the apparatus to be driven. If, while in this state, the motor is stopped or decelerated to stop or decelerate the external rotary member 1 so that the rotational inertia of the apparatus acts upon the internal rotary member 2, then the rollers 3 and 4 are carried between the two rotary members 1 and 2 toward the wider sides of the clutch member spaces 5 by their contacts with the internal rotary member 2 so that the rollers 4 are switched from the ON state to the OFF state to release the coupling between the internal rotary member 2 and the external rotary member 1. As a result, the internal rotary member 2 is enabled to rotate in the direction F relative to the external rotary member 1 by the rotational inertia of the apparatus to be driven. Then, the rollers 3 come into direct abutment against the stoppers 1b, and the rollers 4 come into abutment against the rollers 3 so that the stoppers 1b act to receive the rollers 3 and 4 by directly contacting roller 3 which, in turn, contacts roller 4. In this position, rollers 3 and 4 are at the limit of their movement in this direction and are in a standby position for moving to the narrower sides of the clutch member spaces 5 when the external rotary member 1 is subsequently accelerated.

At the transmission time, as shown in Fig. 3, the rollers 3 are positioned to abut against the rollers 4 in the aforementioned ON state. If desired, the rollers 3 may be prevented from biting into the cam surfaces K1 and K2 and accordingly from coupling the two rotary members 1 and 2 at the transmission time by setting their diameter D3 so that the rollers 3 have a gap from the cam surfaces K1 and K2. Alternatively, the rollers 3 may be sized to bite like the rollers 4 into the cam surfaces K1 and K2 at the transmission time to couple the two rotary members 1 and 2. With this construction, the load at the transmission time is shared between the rollers 3 and 4 so that the wear of the rollers 4 resulting from their transmitting actions is made less than that of the time when only the rollers 4 participate in the coupling action.

In addition to the structure in which the rollers 4 are forced into the transmission ON state exclusively by the rollers 3, there may also be provided auxiliary springs for urging the rollers 3 toward the narrower sides of the clutch member spaces 5 to bring the rollers 4 into the transmission ON state. Since, in this modification, the urging forces of the auxiliary springs may be far weaker than those of the prior art, and since the rollers 3 can be brought at the overrunning time into abutment against the stoppers 1b to prevent the springs from being deformed to their limits, the springs are less frequently deformed and broken than those of the prior art.

Fig. 4 is a cross-sectional view of an alternative embodiment of a clutch member space according to the present invention. In this embodiment, the cam surfaces K1 of external rotary member 1 each include a ridge 9. The ridges 9 act as reinforcing ribs and are arranged to allow the rolling members 4 to switch between the aforementioned clutch OFF state and the aforementioned clutch ON state without preventing the rolling members 3 from coming into contact with the rolling members 4. Each cam surface K1 comprises a cam surface portion 10, which is positioned at the wider side of the clutch member space 5 next to the ridge 9, and a cam surface portion 11 which is positioned at the narrower side of the clutch member space 5 next to the ridge 9. These cam surface portions 10 and 11 are positioned on a virtual arcuate surface on an axis different from the axis X of rotation of the external rotary member 1, and they have the same general shape as the cam surfaces K1 of the one-way clutch of Figs. 1 to 3. That is, the cam surfaces K1 are substantially identical to the cam surfaces K1 of Figs. 1 to 3 and smoothly extend along the circumference of the rotary member 1. Thus, the ridges 9 do not obstruct the actions of the rolling members 3 and 4, so the cam surfaces K1 formed of the cam surface portions 10 and 11 perform the same actions as those of the cam surfaces K1 of Figs. 1 to 3 which do not have ridge 9. In general, the cam surfaces need not have a smooth, continuous shape, as long as the cam surfaces can perform the same actions as those of the smooth and continuous cam surfaces.

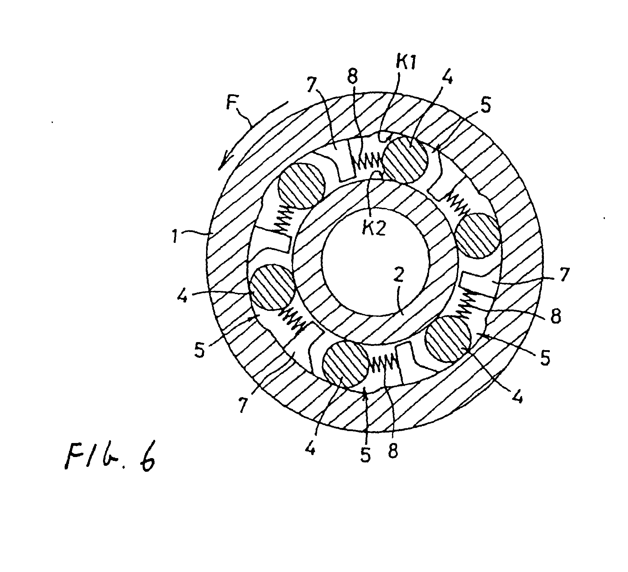

Fig. 5 is a cross-sectional view of an alternative embodiment of a one-way clutch according to the present invention. In this embodiment, each of a plurality of clutch member spaces 5 between the external rotary member 1 and the internal rotary member 2 is equipped with three rolling members 3, 4 and 6 which are arranged in the circumferential direction of the two rotary members 1 and 2. These three rolling members 3,4 and 6 are arranged such that the rolling member 3 takes the foremost position in the direction of rotation F of the two rotary members 1 and 2; the rolling member 6 takes the rearmost position; and the rolling member 4 is interposed between the rolling members 3 and 6. The rolling members 3, 4 and 6 are set to have their diameters D3, D4 and D6 as follows:

$$D3>D4>D6.$$

In this embodiment, all of the three rolling members 3, 4 and 6 constitute clutch rolling members so that when the external rotary member 1 rotates in the direction F the three rolling members 3, 4 and 6 can bite into the cam surfaces K1 of the external rotary member 1 and the cam surface K2 of the internal rotary member 2 to couple the two rotary members 1 and 2 in an integrally rotatable manner.

If less than all the rolling members 3, 4, or 6 act as clutch rolling members, whether by design or because of a size difference due to manufacturing errors, then, after the initial clutch rolling members have worn, the remaining rolling members can additionally act as the clutch rolling members to couple the two rotary members 1 and 2. Alternatively, only the rolling members other than the worn rolling member can act as the clutch rolling members to couple the two rotary members 1 and 2, thus replacing the worn rolling members in the transmission function.

If the cam surfaces K1 of the external rotary member 1 are made arcuate and have smooth and continuous curved surfaces, the three rolling members 3, 4 and 6 can contact one another in the same manner as the embodiment shown in Figs. 1-3. That is, they can be switched between the biting state and the released state with the cam surfaces K1 and K2 while contacting one another. As a result, when the external rotary member 1 rotates, the rolling members positioned in the forward side of the direction of rotation can push the rolling members positioned in the rear side to the narrower side of the clutch member spaces to quickly bite into the cam surfaces.

If desired, rollers 3,4 and 6 could take the form of roller bearings which extend in the direction along the axis X of rotation of the external rotary member 1 and the internal rotary member 2. If so constructed, then rollers 3, 4, and 6 linearly contact the two rotary members 1 and 2 so that they can bear as much of a transmission load as possible while avoiding the dents which might otherwise be caused as a result of application of the transmission load to the rollers and the rotary members. Consequently, the torque to be transmitted can be increased as much as possible.

While the above is a complete description of some embodiments of the present invention, various modifications may be employed. For example, the present invention can be applied not only to the construction where the external rotary member is disposed at the input side and the internal rotary member is disposed at the output side, as in the foregoing embodiments, but also to a one-way clutch wherein the internal rotary member is disposed at the input side and the external rotary member is disposed at the output side. Consequently, the scope of the invention should be ascertained by the following claims.

**Claims**

1. A one way clutch comprising:

    an internal rotary member (2);
    an external rotary member (1);
    in which a surface (K2) of the internal rotary member (2) and a surface (K1) of the external rotary member (1) define a plurality of clutch member spaces (5) so that a width of each clutch member space varies from a wider portion to a narrower portion;
    first and second rolling members (3, 4) disposed in each clutch member space;
    a stopper (1b), disposed at the wider portion of each clutch member space (5), the stopper being formed as one piece with the external rotary member and the stopper being adapted to directly receive the first rolling member (3) and limit the motion of the first rolling member (3) within the clutch member space (5);
    in which at least one of the first and second rolling members (3, 4), when in a first position, contacts the surfaces (K2, K1) of both the internal and the external rotary members (2, 1) in order to inhibit relative rotation thereof; and in which the at least one of the first and second rolling members (3, 4) when in a second position allows relative rotation of the internal and the external rotary members (2, 1); wherein
    the surface of the stopper (1b) in each clutch member space (5) which is adapted to directly receive the first rolling member has a radius of curvature substantially equal to the radius of curvature of the outer surface of the first rolling member (3); and
    the first rolling member (3) is adapted to be urged by rotation about its own axis, by the contact of the first rolling member (3) with at least one of said internal and external rotary members (2, 1), so as to dispose said at least one of the first and second rolling members (3, 4) into the first position.

2. The one-way clutch according to any preceding claim wherein both the first and second rolling members (3,4) securely contact the surfaces (K1, K2) of both the external rotary member (1) and internal rotary member (2) when the at least one of the first and second rolling members (3,4) is in the first position.

**3.** The one-way clutch according to any preceding claim wherein the first and second rolling members (3,4) contact each other when the at least one of the first and second rolling members (3,4) is in the first position.

**4.** The one-way clutch according to any of claims 1 to 2 wherein the first and second rolling members (3,4) are spaced apart from each other when the at least one of the first and second rolling members (3,4) is in the first position.

**5.** The one-way clutch according to Claim 1 wherein only the second rolling member (4) securely contacts the surfaces (K1, K2) of both the external rotary member (1) and internal rotary member (2) in order to inhibit the relative rotation thereof.

**6.** The one-way clutch according to claim 5 wherein the first rolling member (3) contacts the second rolling member (4) when the second rolling member (4) securely contacts the surfaces (K1, K2) of both the external rotary member (1) and internal rotary member (2).

**7.** The one-way clutch according to claim 6 wherein the first rolling member (3) contacts the surface (K1) of the external rotary member (1) and rolls to push the second rolling member (4) so that the second rolling member (4) securely contacts the surfaces (K1, K2) of both the external rotary member (1) and internal rotary member (2) in order to inhibit the rotation thereof.

**8.** The one-way clutch according to any of claims 1, or 5 to 7 wherein the first rolling member (3) is the same size as the second rolling member (4).

**9.** The one-way clutch according to any of claims 1 to 3 wherein the first rolling member (3) is disposed in front of the second rolling member (4) in the direction of rotation of the internal rotary member (2) and external rotary member (1) and wherein the first rolling member (3) has a greater diameter than the second rolling member (4).

**10.** The one-way clutch according to claim 9 wherein the surface (K1) of the external rotary member (1) is shaped as a continuous smooth curve so that the first and second rolling members (3,4) contact each other when at least one of the first and second rolling members (3,4) moves from the first position to the second position.

**11.** The one-way clutch according to any preceding claim, comprising a plurality of rolling members (3,4,6) disposed in each clutch member space, wherein said plurality of rolling members includes said first rolling member (3) and said second rolling member (4) and at least one subsequent rolling member (6).

**12.** The one-way clutch according to claim 11 when dependent upon Claim 3 or any claim dependent thereon, wherein the plurality of rolling members (3,4,6) contact each other while the relative rotation of the internal rotary member (2) and external rotary member (1) is inhibited.

**13.** The one-way clutch according to either of Claims 11 or 12 when dependent upon Claim 10, wherein the surface (K1) of the external rotary member (1) is shaped as a continuous smooth curve so that the plurality of rolling members (3,4,6) in each clutch member space contact each other when the at least one of the first and second rolling members (3,4) moves from the first position to the second position.

**14.** The one-way clutch according to any preceding claim wherein the clutch member spaces are not provided with springs to bias the rolling members (3, 4, 6) to the first position.

**15.** The one-way clutch according to any preceding claim wherein there is provided a generally cylindrical space between the internal rotary member (2) and the external rotary member (1), and wherein the only elements of the one-way clutch disposed within said generally cylindrical space are the rolling members (3, 4, 6).

**Patentansprüche**

**1.** Eine Einwegkupplung, die aus folgendem besteht:

einem Innendrehteil (2);

einem Außendrehteil (1);

wobei eine Fläche (K2) des Innendrehteils (2) und eine Fläche (K1) des Außendrehteils (1) eine Vielzahl von Kupplungsteilzwischenräumen (5) definieren, so daß eine Breite jedes Kupplungsteilzwischenraumes zwischen einem breiteren Teil und einem schmaleren Teil variiert;

einem ersten und einem zweiten Rollteil (3, 4), die in jedem Kupplungsteilzwischenraum angeordnet sind;

einem Ausrücker (1b), der bei dem breiteren Teil jedes Kupplungsteilzwischenraums (5) angeordnet ist, wobei der Ausrücker mit dem Außendrehteil einstückig geformt ist und wobei der Ausrücker angepaßt ist, um den ersten Rollteil (3) direkt aufzunehmen und die Bewegung des ersten Rollteils (3) innerhalb des Kupplungsteilzwischenraums (5) einzuschränken;

wobei zumindest ein erster oder zweiter Rollteil (3, 4), wenn er sich in einer ersten Position befindet, die Flächen (K2, K1) des Innenund Außendrehteils (2,1) berührt, um deren relative Drehung zu hemmen; und wobei zumindest der erste oder der zweite Rollteil (3, 4) die relative Drehung des Innen- und Außendrehteils (2, 1) ermöglicht, wenn er sich in einer zweiten Position befindet;
wobei

die Fläche des Ausrückers (1b) in jedem Kupplungsteilzwischenraum (5), der angepaßt ist, um den ersten Rollteil direkt aufzunehmen, einen Krümmungsradius aufweist, der im wesentlichen gleich groß wie der Krümmungsradius der Außenfläche des ersten Rollteils (3) ist; und

der erste Rollteil (3) ausgerichtet ist, um mittels Berührung des ersten Rollteils (3) mit zumindest dem Innen- oder dem Außendrehteil (2, 1) um seine eigenen Achse gedreht zu werden, so daß zumindest der erste oder der zweite Rollteil (3, 4) in der ersten Position angeordnet ist.

2. Einwegkupplung gemäß einem der vorhergehenden Ansprüche, wobei der erste und der zweite Rollteil (3, 4) die Flächen (K1, K2) des Außendrehteils (1) und des Innendrehteils (2) fest berühren, wenn sich zumindest der erste oder der zweite Rollteil (3, 4) in der ersten Position befindet.

3. Einwegkupplung gemäß einem der vorhergehenden Ansprüche, wobei der erste und der zweite Rollteil (3, 4) einander berühren, wenn sich zumindest der erste oder der zweite Rollteil (3, 4) in der ersten Position befindet.

4. Einwegkupplung gemäß einem der Ansprüche 1 bis 2, wobei der erste und der zweite Rollteil (3, 4) voneinander getrennt sind, wenn sich zumindest der erste oder der zweite Rollteil (3, 4) in der ersten Position befindet.

5. Einwegkupplung gemäß Anspruch 1, wobei nur der zweite Rollteil (4) die Flächen (K1, K2) des Außendrehteils (1) und des Innendrehteils (2) fest berührt, um die relative Drehung zu hemmen.

6. Einwegkupplung gemäß Anspruch 5, wobei der erste Rollteil (3) den zweiten Rollteil (4) berührt, wenn der zweite Rollteil (4) die Flächen (K1, K2) des Außendrehteils (1) und des Innendrehteils (2) fest berührt.

7. Einwegkupplung gemäß Anspruch 6, wobei der erste Rollteil (3) die Fläche (K1) des Außendrehteils (1) berührt und rollt, um den zweiten Rollteil (4) zu stoßen, so daß der zweite Rollteil (4) die Flächen (K1, K2) des Außendrehteils (1) und des Innendrehteils (2) fest berührt, um die Drehung zu hemmen.

8. Einwegkupplung gemäß einem der Ansprüche 1 oder 5 bis 7, wobei der erste Rollteil (3) gleich groß wie der zweite Rollteil (4) ist.

9. Einwegkupplung gemäß einem der Ansprüche 1 bis 3, wobei der erste Rollteil (3) vor dem zweiten Rollteil (4) in der Drehrichtung des Innendrehteils (2) und des Außendrehteils (1) angeordnet ist und wobei der erste Rollteil (3) einen größeren Durchmesser als der zweite Rollteil (4) aufweist.

10. Einwegkupplung gemäß Anspruch 9, wobei die Fläche (K1) des Außendrehteils (1) als eine kontinuierliche, glatte Kurve geformt ist, so daß sich der erste und der zweite Rollteil (3, 4) berühren, wenn zumindest der erste oder der zweite Rollteil (3, 4) von der ersten Position zur zweiten Position übergeht.

11. Einwegkupplung gemäß einer der vorhergehenden Ansprüche, die eine Vielzahl von Rollteilen (3, 4, 6) beinhaltet, die in jedem Kupplungsteilzwischenraum angeordnet sind, wobei die Vielzahl der Rollteile den ersten Rollteil (3) und den zweiten Rollteil (4) und zumindest einen nachfolgenden Rollteil (6) beinhaltet.

12. Einwegkupplung gemäß Anspruch 11, wenn sie von Anspruch 3 oder von einem der davon abhängenden Ansprüche abhängt, wobei die Vielzahl der Rollteile (3, 4, 6) einander berühren, während die relative Drehung des Innendrehteils (2) und des Außendrehteils (1) gehemmt ist.

13. Einwegkupplung gemäß einem der Ansprüche 11 oder 12, wenn sie von Anspruch 10 abhängt, wobei die Fläche (K1) des Außendrehteils (1) als eine kontinuierliche, glatte Kurve geformt ist, so daß die Vielzahl der Rollteile (3, 4, 6) in jedem Kupplungsteilzwischenraum einander berühren, wenn zumindest der erste oder der zweite Rollteil (3, 4) von der ersten Position zur zweiten Position übergeht.

14. Einwegkupplung gemäß einem der vorhergehenden Ansprüche, wobei die Kupplungsteilzwischenräume nicht mit Federn zum Hinlenken der Rollteile (3, 4, 6) zur ersten Position bereitgestellt sind.

15. Einwegkupplung gemäß einer der vorhergehenden Ansprüche, wobei zwischen dem Innendrehteil (2) und dem Außendrehteil (1) ein im allgemeinen zylindrischer Zwischenraum bereitgestellt ist, und wobei die einzigen Teile der Einwegkupplung, die in dem zylindrischen Zwischenraum angeordnet sind, die Rollteile (3,4,6) sind.

**Revendications**

1. Un embrayage unidirectionnel comprenant :

    un élément rotatif interne (2) ;

    un élément rotatif externe (1);

    dans lequel une surface (K2) de l'élément rotatif interne (2) et une surface (K1) de l'élément rotatif externe (1) définissent une pluralité d'espaces d'éléments d'embrayage (5) de sorte qu'une largeur de chaque espace d'élément d'embrayage varie d'une portion plus large à une portion plus étroite ;

    des premier et second éléments roulants (3, 4) placés dans chaque espace d'élément d'embrayage ;

    une butée (1b), disposée au niveau de la portion plus large de chaque espace d'élément d'embrayage (5), la butée étant formée de façon à ne faire qu'un avec l'élément rotatif externe et la butée étant adaptée pour recevoir directement le premier élément roulant (3) et limiter le mouvement du premier élément roulant (3) à l'intérieur de l'espace d'élément d'embrayage (5) ;

    dans lequel au moins un élément roulant parmi les premier et second éléments roulants (3, 4), lorsqu'il est dans une première position, entre en contact avec les surfaces (K2, K1) à la fois de l'élément rotatif interne et de l'élément rotatif externe (2, 1) de manière à entraver leur rotation relative ; et dans lequel l'élément roulant au moins parmi les premier et second éléments roulants (3, 4), lorsqu'il est dans une seconde position, permet la rotation relative des éléments rotatifs interne et externe (2, 1) ;

dans lequel

    la surface de la butée (1b) dans chaque espace d'élément d'embrayage (5), laquelle est adaptée pour recevoir directement le premier élément roulant, a un rayon de courbure sensiblement égal au rayon de courbure de la surface externe du premier élément roulant (3) ; et

    le premier élément roulant (3) est adapté pour être entraîné en rotation autour de son propre axe, par le contact du premier élément roulant (3) avec au moins un élément rotatif parmi lesdits éléments rotatifs interne et externe (2, 1), de manière à disposer ledit élément roulant au moins parmi les premier et second éléments roulants (3, 4) dans la première position.

2. L'embrayage unidirectionnel selon n'importe quelle revendication précédente dans lequel les premier et second éléments roulants (3, 4) entrent tous deux en contact sûr avec les surfaces (K1, K2) à la fois de l'élément rotatif externe (1) et de l'élément rotatif interne (2) lorsque l'élément roulant au moins parmi les premier et second éléments roulants (3, 4) se trouve en première position.

3. L'embrayage unidirectionnel selon n'importe quelle revendication précédente dans lequel les premier et second éléments roulants (3, 4) entrent en contact l'un avec l'autre lorsque l'élément roulant au moins parmi les premier et second éléments roulants (3, 4) se trouve en première position.

4. L'embrayage unidirectionnel selon n'importe lesquelles des revendications 1 à 2 dans lequel les premier et second éléments roulants (3, 4) sont espacés l'un de l'autre lorsque l'élément roulant au moins parmi les premier et second éléments roulants (3, 4) se trouve en première position.

5. L'embrayage unidirectionnel selon la revendication 1 dans lequel seul le second élément roulant (4) entre en contact sûr avec les surfaces (K1, K2) à la fois de l'élément rotatif externe (1) et de l'élément rotatif interne (2) de manière à entraver leur rotation relative.

6. L'embrayage unidirectionnel selon la revendication 5 dans lequel le premier élément roulant (3) entre en contact avec le second élément roulant (4) lorsque le second élément roulant (4) entre en contact sûr avec les surfaces (K1, K2) à la fois de l'élément rotatif externe (1) et de l'élément rotatif interne (2).

7. L'embrayage unidirectionnel selon la revendication 6 dans lequel le premier élément roulant (3) entre en contact avec la surface (K1) de l'élément rotatif externe (1) et roule pour pousser le second élément roulant (4) de façon à ce que le second élément roulant (4) entre en contact sûr avec les surfaces (K1, K2) à la fois de l'élément rotatif externe (1) et de l'élément rotatif interne (2) de manière à entraver leur rotation.

8. L'embrayage unidirectionnel selon n'importe lesquelles des revendications 1, ou 5 à 7, dans lequel le premier élément roulant (3) est de même taille que le second élément roulant (4).

9. L'embrayage unidirectionnel selon n'importe lesquelles des revendications 1 à 3 dans lequel le premier élément roulant (3) est disposé devant le second élément roulant (4) dans le sens de rotation de l'élément rotatif interne (2) et de l'élément rotatif externe (1) et dans lequel le premier élément roulant (3) a un plus grand diamètre que le second élément roulant (4).

10. L'embrayage unidirectionnel selon la revendication 9 dans lequel la surface (K1) de l'élément rotatif externe (1) a la forme d'une courbe lisse continue de sorte que les premier et second éléments roulants (3, 4) entrent en contact l'un avec l'autre lorsqu'un élément roulant au moins parmi les premier et second éléments roulants (3, 4) passe de la première position à la seconde position.

11. L'embrayage unidirectionnel selon n'importe quelle revendication précédente, comprenant une pluralité d'éléments roulants (3, 4, 6), lesquels sont disposés dans chaque espace d'élément d'embrayage, dans lequel ladite pluralité d'éléments roulants comprend ledit premier élément roulant (3) et ledit second élément roulant (4) et au moins un élément roulant suivant (6).

12. L'embrayage unidirectionnel selon la revendication 11 lorsqu'elle dépend de la revendication 3 ou de n'importe quelle revendication en dépendant, dans lequel la pluralité d'éléments roulants (3, 4, 6) entrent en contact les uns avec les autres tandis que la rotation relative de l'élément rotatif interne (2) et de l'élément rotatif externe (1) est entravée.

13. L'embrayage unidirectionnel selon l'une ou l'autre des revendications 11 ou 12 lorsqu'elles dépendent de la revendication 10, dans lequel la surface (K1) de l'élément rotatif externe (1) a la forme d'une courbe lisse continue de sorte que la pluralité d'éléments roulants (3, 4, 6) dans chaque espace d'élément d'embrayage entrent en contact les uns avec les autres lorsque l'élément roulant au moins parmi les premier et second éléments roulants (3, 4) passe de la première position à la seconde position.

14. L'embrayage unidirectionnel selon n'importe quelle revendication précédente dans lequel les espaces d'éléments d'embrayage ne sont pas munis de ressorts pour décaler les éléments roulants (3, 4, 6) à la première position.

15. L'embrayage unidirectionnel selon n'importe quelle revendication précédente dans lequel un espace généralement cylindrique est prévu entre l'élément rotatif interne (2) et l'élément rotatif externe (1), et dans lequel les seuls éléments de l'embrayage unidirectionnel qui soient disposés à l'intérieur dudit espace généralement cylindrique sont les éléments roulants (3, 4, 6).

FIG. 1

FIG. 2

F

K1

5

1b

1

3

4

2

K2

FIG. 3

K1

10    11

F

9

5

1b

1

3

4

2

K2

FIG. 4

FIG. 5

FIG. 6